# FASCICULE DE BREVET EUROPEEN

(11) **EP 2 373 502 B1**
(45) Date de publication et mention de la délivrance du brevet: **09.01.2019**
(21) Numéro de dépôt: 09748819.1
(22) Date de dépôt: 13.11.2009
(51) Int. Cl.: B60C 11/12

(54) **BANDE DE ROULEMENT POUR PNEU COMPORTANT DES INCISIONS POURVUES DE PROTUBERANCES**
REIFENLAUFFLÄCHE MIT EINSCHNITTEN, DIE MIT VORSPRÜNGEN VERSEHEN SIND
TIRE TREAD COMPRISING INCISIONS PROVIDED WITH PROJECTIONS

(30) Priorité: 05.12.2008 FR 0858296
(43) Date de publication de la demande: 12.10.2011
(73) Titulaire: Compagnie Générale des Etablissements Michelin, 63000 Clermont-Ferrand (FR)
(72) Inventeur: BERGER, Eric, F-63410 Loubeyrat (FR); BONNAMOUR, Matthieu, F-63430 Pont du Chateau (FR)
(74) Mandataire: Diernaz, Christian
(86) Numéro de dépôt international: PCT/EP2009/065168
(87) Numéro de publication internationale: WO 2010/063558

(56) Documents cités:
- EP-A- 0 515 349
- EP-A- 1 170 153
- EP-A- 1 533 141
- EP-A- 1 652 695
- EP-A- 1 669 218
- EP-A2- 0 846 578
- WO-A-01/60642
- WO-A-99/48707
- US-A- 5 783 002

## Description

L'invention concerne les bandes de roulement de pneumatiques et plus particulièrement encore les incisions dont sont pourvus les éléments de relief de telles bandes de roulement.

Pour améliorer l'adhérence des pneumatiques lors du roulage sur un sol revêtu d'eau après la pluie ou lors du roulage dans des conditions hivernales, il est connu de pourvoir les bandes de roulement de ces pneumatiques avec un plus ou moins grand nombre de découpures pour créer des arêtes et des espaces de drainage. Parmi les découpures, on distingue les rainures qui présentent une largeur telle que les faces en vis-à-vis les délimitant ne viennent jamais en contact l'une avec l'autre pendant le roulage pour autant que ce soient des conditions usuelles de roulage. Ces rainures délimitent des éléments de relief présentant des faces latérales et une face de contact, cette dernière étant destinée à venir en contact avec la chaussée pendant le roulage.

On distingue par ailleurs, parmi les découpures, les incisions qui ont des largeurs faibles permettant, dans certaines conditions de roulage, aux faces délimitant chaque incision de venir en contact l'une contre l'autre. Dans ce dernier cas, on utilise un effet d'arêtes supplémentaires créées par les incisions pour améliorer l'adhérence ("grip" en anglais) sans pour autant trop diminuer la rigidité de la bande de roulement grâce à la mise contact des faces de ces incisions.

Il est par ailleurs connu de réduire encore la diminution de rigidité en créant un engrènement mécanique des faces en vis-à-vis d'une incision en pourvoyant chaque face avec des reliefs coopérant avec les reliefs prévus sur la face opposée pour réduire le plus possible les mouvements relatifs d'une face par rapport à la face en vis-à-vis. Le brevet US 5 783 002 A décrit une telle structure. Par relief, on entend ici aussi bien une partie en creux qu'une partie en saillie sur une face. Le document EP 1 170 153 A1 décrit un pneu comprenant des incisions présentant des parois en vis-à-vis en zigzag, ces incisions étant en outre adaptées pour compenser un effet de Poisson à l'écrasement.

Toutefois, et selon la direction de l'effort exercé par le sol sur la bande de roulement dans le contact et selon le niveau d'adhérence résultant des conditions de roulage que rencontre un usager, il est nécessaire d'améliorer encore la performance des pneumatiques pourvus d'incisions. C'est précisément le cas au cours des phases de démarrage d'un véhicule sur sol enneigé où il est recherché une plus grande souplesse de la bande de roulement comparativement à ce qui est requis dans la phase de freinage sur sol sec. Dans cette dernière configuration, il est recherché une grande fermeté et donc une plus grande rigidité des éléments composant la bande de roulement (à ce sujet, voir également le document EP 0 846 578 A2).

La présente invention a pour objectif de proposer un pneumatique qui permette d'atteindre à la fois de meilleures performances pendant les phases de démarrage sur sol enneigé et pendant les phases de freinage sur sol sec.

Dans ce but, il est proposé un pneu comprenant un sens de rotation préférentiel repéré par un moyen visible sur le pneu, ce pneu étant pourvu avec une bande de roulement comprenant une pluralité d'éléments de relief, chaque élément de relief ayant une face de contact et des faces latérales, au moins certains de ces éléments de reliefs ayant au moins une incision débouchant sur deux desdites faces latérales, cette incision étant délimitée par une première face et une seconde face, la première face comprenant au moins une protubérance et la seconde face comprenant autant de paires de première et deuxième protubérances que de protubérances sur la première face, chaque protubérance de la première face étant prévue pour pouvoir coopérer par contact avec une paire de première protubérance et de deuxième protubérance sur la seconde face en vis-à-vis, lesdites première et deuxième protubérances de la seconde face étant situées de part et d'autre de chaque protubérance de la première face selon des directions opposées D1 et D2.

Cette bande de roulement est telle que le sens de rotation préférentiel du pneu est déterminé pour que - sous l'effet d'un effort freineur exercé par le sol sur la bande de roulement lors d'une manoeuvre de freinage, les protubérances de la première face de chaque incision soient plus rapidement en contact avec les protubérances de la seconde face que lorsque ce même pneumatique est soumis à un effort moteur exercé par le sol, c'est-à-dire que la distance **e1** de déplacement relatif de la première face par rapport à la seconde face dans la direction D1 jusqu'au contact des protubérances de ladite première face avec les protubérances de ladite seconde face est différente de, à savoir strictement inférieure à la distance **e2** de déplacement relatif de la première face par rapport à la seconde face dans la direction D2 opposée à la direction D1 jusqu'au contact des protubérances de ladite première face avec les protubérances de ladite seconde face.

Ainsi on forme une pluralité de protubérances sur la première face pour coopérer par contact avec des premières protubérances sur la seconde face en vis-à-vis après un déplacement égal à une distance **e1** et avec des deuxièmes protubérances après un déplacement égal à une distance **e2,** ces déplacements se faisant dans des directions opposées, la distance **e1** étant strictement inférieure à la distance **e2.**

Grâce au pneu pourvu d'une bande de roulement selon l'invention, il est possible limiter de manière différentielle les déplacements relatifs d'une face délimitant une incision par rapport à la face en vis-à-vis ; il est ainsi possible d'adapter au mieux lesdits déplacements aux conditions d'utilisation.

Avantageusement, cette bande de roulement équipe un pneu comprenant un sens de rotation préférentiel repéré par un moyen visible sur ce pneu comme une flèche moulée sur la surface externe visible dudit pneu. Le sens de rotation préférentiel est déterminé de façon que, sous un effort freineur exercé par le sol sur la bande de roulement lors d'une manoeuvre de freinage, les protubérances des faces des incisions soient plus rapidement en contact que lorsque le même pneumatique est soumis à un effort moteur exercé par le sol. Bien entendu, le moyen visible utilisé pour indiquer le sens de rotation préférentiel, peut être disposé sur la bande de roulement elle-même.

En effet, lorsque le pneumatique selon l'invention se trouve dans une configuration de freinage sur sol fortement adhérent (sol sec notamment), les efforts exercés par le sol sur la bande de roulement du pneu sont dirigés dans le sens opposé à la direction d'avancement du véhicule équipé avec ledit pneumatique, ce qui a tendance à fermer les incisions : les faces en vis-à-vis délimitant une incision ont tendance à se déplacer l'une par rapport à l'autre suivant une direction et sont, après un très court déplacement, bloquées par le contact des protubérances formées sur les faces. Ce blocage rapide permet en outre de limiter la flexion des lames de matière entre deux incisions. Le choix judicieux de la distance avant blocage permet d'obtenir un effet de blocage quasiment instantané ce qui est favorable à un freinage efficace.

A contrario, dans une situation de démarrage (couple moteur agissant sur le pneu) sur un sol faiblement adhérent, le sol exerçant sur la bande de roulement un effort dirigé dans le sens du mouvement voulu du véhicule, il est possible grâce à l'invention d'augmenter la flexion des lames de matière jusqu'à ce que les faces ne soient bloquées par le contact des reliefs en saillies formés sur lesdites faces.

Dans une variante particulièrement intéressante de l'invention, pour chaque incision pourvue de protubérances et ayant une longueur L, au moins certaines des protubérances de ces incisions ont une forme allongée et s'étendent sur au moins 50% de la longueur L de l'incision. Encore plus préférentiellement, les protubérances de forme allongée s'étendent sur toute la longueur de l'incision, afin d'assurer une bonne maîtrise des efforts de contact entre lesdits reliefs lorsque ceux-ci viennent en contact dans les phases de freinage sur sol fortement adhérent..

La longueur L d'une incision est mesurée comme la longueur de l'une des deux arêtes que cette incision forme sur la face de contact de l'élément à l'intérieur duquel elle est formée à l'état neuf.

Afin d'optimiser l'effet de blocage mécanique, il est avantageux que toutes les protubérances formées sur les parois en vis-à-vis d'au moins une incision aient une forme allongée et s'étendent sur au moins 50% de la longueur de l'incision, voire encore plus préférentiellement sur toute la longueur de l'incision.

Dans le but de limiter également le mouvement de glissement d'une paroi d'une incision relativement à la paroi en vis-à-vis (c'est-à-dire dans des directions perpendiculaires aux directions D1 et D2), les protubérances s'étendent sur au moins 50% de la longueur L de l'incision et ont une forme en zigzag ou ondulée. Ainsi lors d'une manoeuvre de virage combinée à un freinage, les protubérances en zigzag réalisent à la fois un blocage rapide des mouvements relatifs des parois dans les directions D1 et D2 et dans le même temps un blocage des mouvements relatifs desdites parois dans des directions perpendiculaires aux directions D1 et D2. Encore plus avantageusement, les protubérances qu'elles soient rectilignes ou en zigzag s'étendent sur au moins 95% de la longueur L de l'incision de façon à bien maîtriser les mouvements relatifs d'une face par rapport à la face en vis-à-vis.

D'autres caractéristiques et avantages de l'invention ressortent de la description faite ci-après en référence aux dessins annexés qui montrent, à titre d'exemples non limitatifs, des formes de réalisation de l'objet de l'invention.
La figure 1 montre une vue d'un élément d'une bande de roulement pourvue d'une incision selon l'invention ;
La figure 2 montre une vue d'une face délimitant l'incision montrée en coupe à la figure 1 ;
La figure 3 montre en coupe un élément d'une bande de roulement comprenant trois incisions pourvues de protubérances dont les sections sont trapézoïdales ;
La figure 4 montre une simulation du comportement des incisions de l'élément montré à la figure 3 lors d'un démarrage ;
La figure 5 montre une simulation du comportement des incisions de l'élément montré à la figure 3 au cours d'un freinage ;
La figure 6 montre une deuxième variante de protubérances favorable en fabrication ;
La figure 7 montre une autre variante d'incision selon laquelle une protubérance coupe la surface de roulement à l'état neuf ;
La figure 8 montre une variante de réalisation d'une incision selon l'invention selon laquelle les parties d'extrémité de l'incision sont de faible largeur et dans l'alignement l'une de l'autre selon les directions D1 et D2 ;
La figure 9 montre une face d'une autre variante d'incision selon l'invention pour laquelle les protubérances s'étendent sur une partie de la longueur de l'incision et ont une forme en zigzag.

Toutes les figures accompagnant la présente description sont données à titre indicatif et les dimensions qu'elles soient absolues ou relatives ne sont qu'indicatives ; par ailleurs, un même élément de structure sera repéré par la même référence numérique sur des figures montrant des variantes différentes de l'invention.

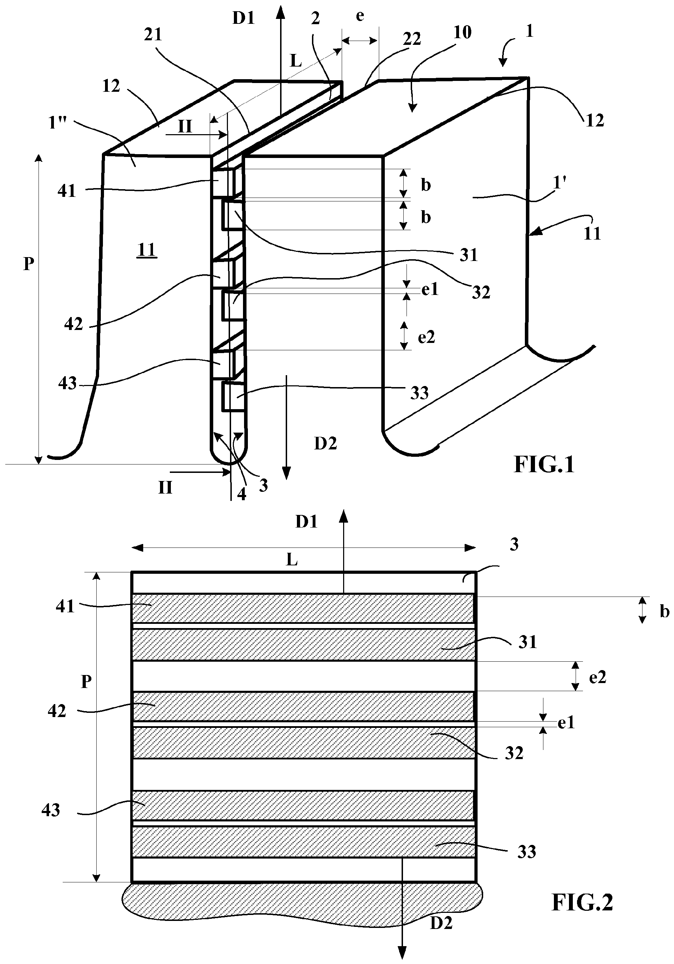

Sur la figure 1 on voit un élément 1 de matière d'une bande de roulement délimité par des rainures. Cet élément 1 comprend une face de contact 10 destinée à venir en contact avec le sol pendant le roulage du pneu pourvu de ladite bande et des faces latérales 11 coupant la face de contact selon des arêtes 12. Cet élément 1 comporte une incision 2 selon l'invention qui débouche sur la face de contact 10 pour former deux arêtes 21, 22 sensiblement parallèles à deux arêtes de l'élément. Cette même incision 1 débouche également sur deux faces latérales 11 opposées l'une à l'autre de ce même élément. Il est ainsi formé deux demi éléments 1', 1" espacés l'un de l'autre par l'incision 2. Cette incision 2 a une longueur L mesurée sur la face de contact 10 de la bande à l'état neuf : cette longueur L correspond dans le cas présent à la longueur de chaque arête 21, 22 formée par l'incision 2 sur la face de contact 10.

L'incision 1 est délimitée par une première face 3 et une seconde face 4, ces première et seconde faces étant situées en vis-à-vis l'une de l'autre et à une distance moyenne l'une de l'autre correspondant à ce que l'on définit comme étant la largeur e de l'incision. D'une manière usuelle, cette largeur e est inférieure ou égale à 2 mm et préférentiellement inférieure ou égale à 0.6 mm de manière à ce qu'en roulage les faces 3, 4 en vis-à-vis viennent en contact au moins partiellement l'une contre l'autre.

Chacune des faces délimitant l'incision est pourvue de plusieurs protubérances en saillie pour s'étendre dans la direction de la face en vis-à-vis. Ces protubérances ont une forme allongée et s'étendent, dans le cas présent, sur toute la longueur L de l'incision et dans une direction parallèle à la face de contact. Ces protubérances ont une section de forme carrée comme cela est visible sur la figure 1. Les protubérances sur une face sont placées de manière alternée avec les protubérances de la face en vis-à-vis.

Une protubérance 31 de la première face 3 est disposée sur ladite première face pour pouvoir coopérer par contact avec une paire de protubérances sur la seconde face 4 en vis-à-vis, cette paire de protubérances comprenant une première protubérance 41 et une deuxième protubérance 42 , lesdites première et deuxième protubérances 41, 42 de la seconde face 4 étant situées de part et d'autre de la protubérance 31 de la première face 3 selon des directions opposées D1 et D2. La direction D1 est la direction perpendiculaire à la face de contact et tangente à une des faces de l'incision, cette direction D1 étant orientée vers l'extérieur de la bande (c'est-à-dire vers le sol lorsque la bande est en roulage). La direction D2 est la direction perpendiculaire à la face de contact et tangente à une des faces de l'incision, cette direction D2 étant orientée dans le sens opposé à la direction D1.

De même, une deuxième protubérance 32 sur la première face 3 est destinée à coopérer par contact avec une autre paire de protubérances 42, 43 de la face en vis-à-vis ; les distances de contact sont ici respectivement égales à e1 et à e2 de façon que chaque protubérance de la face 3 puisse coopérer par contact avec une protubérance de la face 4 en vis-à-vis après un mouvement relatif de valeur e1 dans la direction D1, et d'autre part que chaque protubérance de la face 3 (à l'exception toutefois de la protubérance la plus proche du fond de l'incision) puisse coopérer par contact avec une protubérance de la face 4 en vis-à-vis après un mouvement relatif de valeur e2 dans la direction D2. L'une des protubérances de cette paire est également une protubérance pour la paire précédente. Il pourrait en être différemment si les protubérances de chaque paire étaient distinctes.

La distance el, avant contact entre les protubérances, séparant une protubérance 31, 32, 33 de la première face 4 de la première protubérance, respectivement 41, 42, 43 de la seconde face 4 est différente de la distance e2, avant contact entre protubérances, séparant la protubérance 31, 32 de la première face de la deuxième protubérance respectivement 42, 43 de la seconde face, ces distances e1 et e2 étant mesurées dans des directions parallèles aux directions D1 et D2.

Grâce à cette disposition il est possible de limiter de manière différentielle les déplacements de la première face relativement à la deuxième face dès lors que ces déplacements ont lieu dans une direction perpendiculaire à la face de contact (c'est-à-dire suivant D1 ou D2)

Préférentiellement, la distance e1 est comprise au moins égale à 0.1mm et au plus égale à 0.4mm. La distance e2 est supérieure à 0.4mm et préférentiellement supérieure à 1mm.

La figure 2 montre une coupe selon un plan repéré II-II de l'élément montré avec la figure 1. Sur cette figure 2, on voit les protubérances 31, 32, 33, 41, 42, 43 de chaque face 3, 4 dans la position qu'elles occupent sur le pneu en sortie de moule de fabrication, c'est-à-dire pneu non monté sur un véhicule. Les protubérances de la première face 3 sont encadrées par une première et une seconde protubérances sur la face opposée à l'exception de la protubérance la plus proche du fond de l'incision qui n'a qu'une protubérance voisine à une distance e1. Sur chaque face les protubérances sont réparties de manière à être présentes sur toute l'étendue de l'incision pour être efficace quel que soit le degré d'usure de la bande. La forme de section carrée des protubérances est favorable pour un bon blocage des protubérances entre elles. Chaque protubérance est de forme allongée rectiligne et s'étend sur toute la longueur L des faces délimitant l'incision.

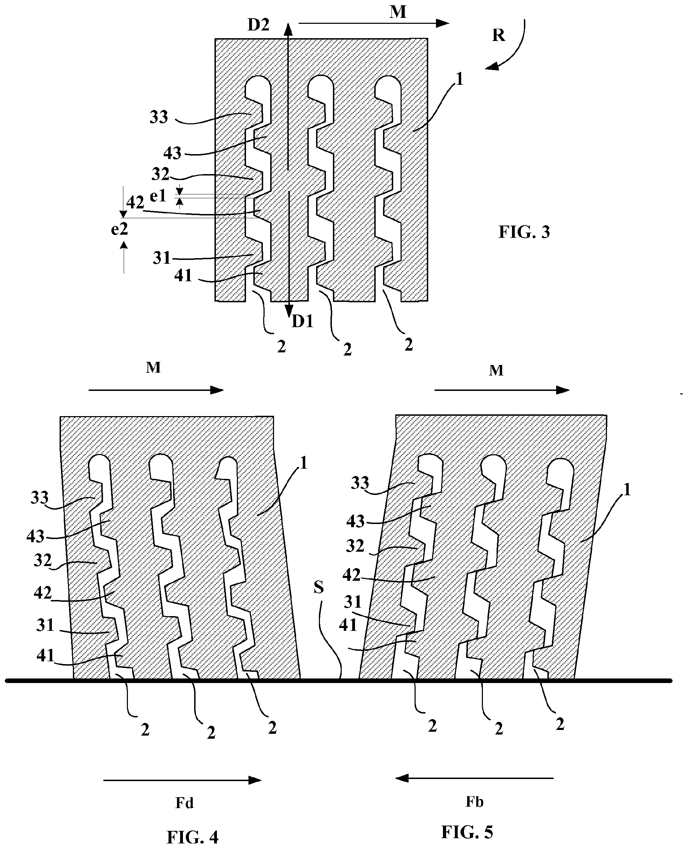

La figure 3 montre en coupe un élément 1 d'une bande de roulement comprenant trois incisions 2 pourvues de protubérances 31, 32, 33, 41, 42, 43 dont les sections sont de forme trapézoïdale, les parois desdites protubérances destinées à venir en contact les unes sur les autres étant obliques. Dans cette configuration, les protubérances ne sont pas encore en contact les unes avec les autres. On pourrait, en choisissant des distances minimales appropriées, avoir un contact entre certaines des protubérances par le simple effet du port de la charge du véhicule sur lequel est monté le pneu et donc de l'écrasement de la bande de roulement. Ceci est particulièrement favorable en manoeuvre de freinage puisque dans ce cas là il n'y a, à la déformation près des matériaux, pas de possibilité de déplacement relatif des faces des incisions. Cette bande est directionnelle, c'est-à-dire que le pneu pourvu d'une telle bande comporte sur ses flancs un moyen visible, comme par exemple une flèche, indiquant le sens imposé de roulage du pneu. Ce sens de roulage est indiqué sur la figure 3 par une flèche R : dans l'exemple montré, le pneu se meut de la gauche du dessin vers la droite selon la direction indiquée par une flèche M. Les directions D1 et D2 sont opposées l'une de l'autre et sont perpendiculaires à la surface de roulement de la bande de roulement. Les distances e1 et e2 entre les parties des protubérances venant en contact, comme cela est montré avec les figures 4 et 5, sont mesurées parallèlement aux directions D1, D2.

La figure 4 montre une simulation du comportement de l'élément 1 de bande de roulement montré à la figure 3 lors d'un démarrage d'un véhicule, c'est-à-dire sous effort moteur. Le sens de déplacement du véhicule est indiqué par une flèche M tandis que l'effort moteur exercé par le sol sur la bande de roulement est indiqué par une flèche Fd orientée dans le même sens que la flèche M. Dans cette configuration, les protubérances 31, 32, 33, 41, 42, 43 formées sur les faces des incisions ne bloquent pas le mouvement relatif desdites faces les unes par rapport aux autres, au moins tant que le déplacement n'a pas atteint une valeur égale à e2. Ce mouvement relatif est favorable à une plus grande déformation de l'élément et donc favorable à un bon contact de l'élément sur le sol pendant que s'exerce cet effort moteur.

La figure 5 montre une simulation du comportement de l'élément 1 montré à la figure 3 lors d'un freinage, c'est-à-dire sous effort freineur. Le sens de l'effort freineur exercé par le sol sur le pneu est indiqué par une flèche Fb qui est ici orienté en sens opposé au mouvement repéré par la flèche M. Dans cette configuration, les protubérances 31, 32, 33, 41, 42, 43 formées sur les faces des incisions se bloquent quasiment instantanément dès que le déplacement a atteint la valeur égale à el, voire même instantanément puisque cette valeur e1 peut être en partie consommée par le port de la charge du véhicule. Ce blocage instantané est favorable pour augmenter la rigidité de l'élément et ainsi limiter la déformation de l'élément.

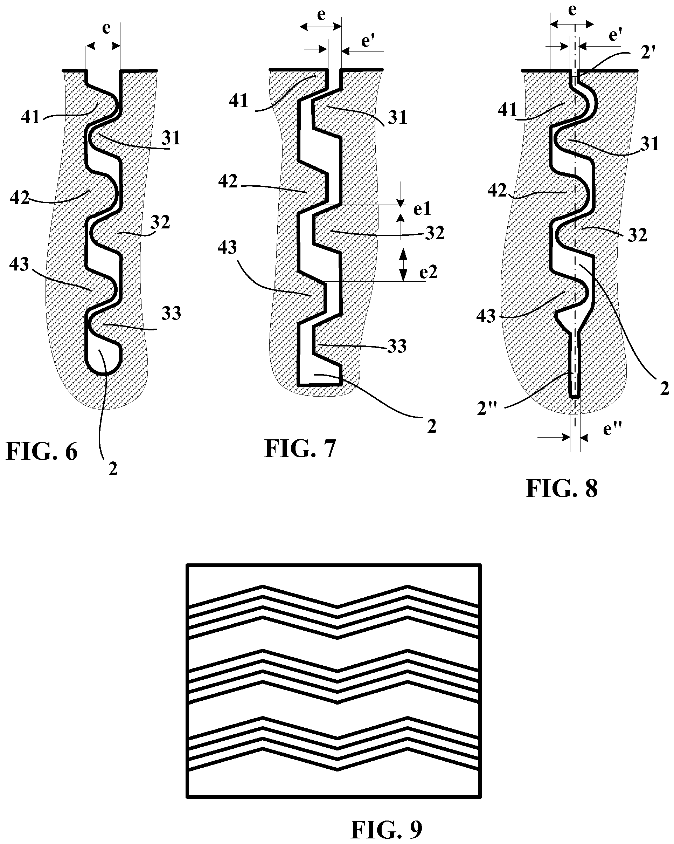

La figure 6 montre une deuxième variante de protubérances 31, 32, 33, 41, 42, 43 facilitant la fabrication des éléments moulants employés pour mouler une incision selon l'invention en évitant la formation d'angles vifs. Dans le cas de cette variante, les sections transversales des protubérances 31, 32, 33, 41, 42, 43 ont, vues dans le plan de la figure 6, des contours curvilignes et non plus trapézoïdaux, ces contours présentant des parties de raccordement entre les différentes surfaces. Pour fabriquer un élément moulant une telle incision, on peut former sur une plaque métallique plane d'épaisseur moyenne égale à la distance e2, et ensuite créer par enlèvement de matière des régions correspondant aux zones inter protubérances de longueur el, et finalement former l'élément moulant par emboutissage.

La figure 7 montre une autre variante d'incision selon laquelle une protubérance 31 sur une face 3 d'une incision 2 coupe la face de contact 10 de l'élément de bande à l'état neuf. À l'état neuf de la bande, la largeur de l'incision visible de la face de contact est réduite à **e'** (inférieure à la largeur moyenne **e** de l'incision) ce qui est favorable dans certains tests réalisés lorsque le pneu est neuf.

La figure 8 montre une variante de réalisation d'une incision 2 selon l'invention selon laquelle l'incision 2 de largeur moyenne **e** comprend une partie d'extrémité 2' débouchant sur la face de contact 10 et une partie d'extrémité 2" en fond d'incision. Dans cette variante, ces parties d'extrémité sont de largeur **e"** sensiblement plus petite que la largeur moyenne **e** de l'incision. En outre, ces parties d'extrémité 2', 2" sont formées dans l'alignement l'une de l'autre selon les directions D1 et D2. Ainsi, il est possible de rendre symétrique le comportement mécanique de l'élément de bande de roulement autour de l'incision 2 et ainsi éviter tout basculement.

Des pneumatiques selon l'invention ont été réalisés et comparés dans des tests de démarrage sur sol enneigé et des tests de freinage sur sol sec avec des pneus de référence. Les pneus de référence comportaient les mêmes dessins de sculpture et les mêmes incisions, la seule différence résidait dans le fait que les protubérances des incisions des pneus de référence étaient toutes à la même distance les unes des autres.

Les pneus étaient de dimension 205/55 R16 et équipaient un véhicule de marque Audi A4.

Le tableau ci après montre les résultats obtenus dans un test de freinage sur sol sec pour passer de 100 km/h à 0 km/h selon lequel on mesure une distance d'arrêt. On réalise par ailleurs un essai d'accélération sur sol enneigé selon lequel on mesure en continu l'accélération en fonction du temps et on calcule une accélération moyenne sur les quatre premières secondes du test.

Une performance supérieure à la base 100, correspondant à la performance du pneu de référence dans chaque test, indique une amélioration de ladite performance.

| | Pneu de référence | Pneu selon l'invention |
|---|---|---|
| Démarrage sur sol enneigé | 100 | 107 |
| Freinage sur sol sec | 100 | 103 |

La figure 9 montre une vue d'une face délimitant une incision selon l'invention et selon laquelle les protubérances formées sur cette face ont une forme allongée s'étendant sur toute la longueur de l'incision et composée d'une pluralité de lignes brisées en zigzag.

L'invention n'est pas limitée aux exemples décrits et représentés et diverses modifications peuvent y être apportées sans sortir de son cadre. En particulier, cette invention s'applique au cas, non montré ici, d'incisions dont la trace, sur la face de contact des éléments, suit une géométrie non rectiligne et notamment une géométrie faite d'ondulations ou de zigzags. Dans une autre variante, au moins une incision pourvue de protubérances sur les faces qui la délimitent est inclinée d'un angle au plus égal à 30 degrés avec une direction perpendiculaire à la face de contact de l'élément dans lequel est formée ladite incision.

## Revendications

1. Pneu comprenant un sens de rotation préférentiel repéré par un moyen visible sur le pneu, ce pneu étant pourvu avec une bande de roulement comprenant une pluralité d'éléments de relief (1), chaque élément de relief ayant une face de contact et des faces latérales (11), au moins certains de ces éléments de reliefs ayant au moins une incision (2) débouchant sur deux desdites faces latérales, cette incision étant délimitée par une première face (3) et une seconde face (4), la première face comprenant au moins une protubérance et la seconde face comprenant autant de paires de première et deuxième protubérances que de protubérances sur la première face, chaque protubérance (31) de la première face (3) étant prévue pour pouvoir coopérer par contact avec une paire de première protubérance (41) et de deuxième protubérance (42) sur la seconde face en vis-à-vis, lesdites première et deuxième protubérances (41, 42) de la seconde face (4) étant situées de part et d'autre de chaque protubérance (31) de la première face (3) selon des directions opposées D1 et D2, cette bande de roulement étant **caractérisée en ce que** le sens de rotation préférentiel du pneu est déterminé pour que - sous l'effet d'un effort freineur exercé par le sol sur la bande de roulement lors d'une manoeuvre de freinage, les protubérances de la première face de chaque incision soient plus rapidement en contact avec les protubérances de la seconde face que lorsque ce même pneumatique est soumis à un effort moteur exercé par le sol, c'est-à-dire que la distance **e1** de déplacement relatif de la première face par rapport à la seconde face dans la direction D1 jusqu'au contact des protubérances de ladite première face avec les protubérances de ladite seconde face est différente de, à savoir strictement inférieure à la distance **e2** de déplacement relatif de la première face par rapport à la seconde face dans la direction D2 opposée à la direction D1 jusqu'au contact des protubérances de ladite première face avec les protubérances de ladite seconde face.

2. Pneu selon la revendication 1 **caractérisée en ce que**, chaque incision (2) pourvue de protubérances (31, 32, 33, 41, 42, 43) ayant une longueur L, au moins certaines des protubérances ont une forme allongée et s'étendent sur au moins 50% de la longueur L de l'incision.

3. Pneu selon la revendication 2 **caractérisée en ce que** toutes les protubérances (31, 32, 33, 41, 42, 43) formées sur les faces en vis-à-vis d'au moins une incision ont une forme allongée et s'étendent sur au moins 50% de la longueur L de l'incision.

4. Pneu selon la revendication 3 **caractérisée en ce que** les protubérances (31, 32, 33, 41, 42, 43) s'étendent sur au moins 50% de la longueur L de l'incision et ont une forme en zigzag ou ondulée.

5. Pneu selon l'une des revendications 1 à 4 **caractérisée en ce que** les protubérances (31, 32, 33, 41, 42, 43) s'étendent sur au moins 95% de la longueur L de l'incision.

6. Pneu selon l'une des revendications 1 à 5 **caractérisée en ce que** chaque incision de largeur moyenne e comprenant des protubérances (31, 32, 33, 41, 42, 43), comprend des parties d'extrémité (2', 2") de largeur e" inférieure à la largeur moyenne e de l'incision, ces parties d'extrémité étant en outre placées dans l'alignement l'une de l'autre et dans le plan moyen de l'incision (2).

7. Pneu selon l'une des revendications 1 à 6 **caractérisée en ce qu'**au moins une incision (2) pourvue de protubérances (31, 32, 33, 41, 42, 43) sur les faces qui la délimitent est inclinée d'un angle au plus égal à 30 degrés avec une direction perpendiculaire à la face de contact de l'élément dans lequel est formée ladite incision.

## Patentansprüche

1. Reifen umfassend eine Vorzugsdrehrichtung, die an einem Mittel erkannt wird, das auf dem Reifen sichtbar ist, wobei dieser Reifen mit einer Lauffläche versehen ist, die eine Mehrzahl von Reliefelementen (1) umfasst, wobei jedes Reliefelement eine Kontaktfläche und Seitenflächen (11) aufweist, wobei zumindest bestimmte dieser Reliefelemente mindestens einen Einschnitt (2) aufweisen, der in zwei der Seitenflächen mündet, wobei dieser Einschnitt von einer ersten Fläche (3) und einer zweiten Fläche (4) begrenzt wird, wobei die erste Fläche mindestens einen Vorsprung umfasst und die zweite Fläche so viele Paare eines ersten und eines zweiten Vorsprungs wie Vorsprünge auf der ersten Fläche umfasst, wobei jeder Vorsprung (31) der ersten Fläche (3) vorgesehen ist, durch Kontakt mit einem Paar eines ersten Vorsprungs (41) und eines zweiten Vorsprungs (42) auf der zweiten Fläche gegenüber zusammenzuwirken, wobei der erste und der zweite Vorsprung (41, 42) der zweiten Fläche (4) beiderseits jedes Vorsprungs (31) der ersten Fläche (3) in entgegengesetzten Richtungen D1 und D2 gelegen sind, wobei diese Lauffläche **dadurch gekennzeichnet ist, dass** die Vorzugsdrehrichtung des Reifens bestimmt ist, damit unter der Einwirkung einer Bremskraft, die bei einem Bremsmanöver von dem Boden auf die Lauffläche ausgeübt wird, die Vorsprünge der ersten Fläche jedes Einschnitts schneller mit den Vorsprüngen der zweiten Fläche in Kontakt stehen als wenn derselbe Reifen einer bewegenden Kraft unterliegt, die von dem Boden ausgeübt wird, das heißt, dass die Strecke e1 eines relativen Wegs der ersten Fläche bezogen auf die zweite Fläche in der Richtung D1 bis zum Kontakt der Vorsprünge der ersten Fläche mit den Vorsprüngen der zweiten Fläche anders als, und zwar streng kleiner als der Weg e2 eines relativen Wegs der ersten Fläche bezogen auf die zweite Fläche in der Richtung D2, die der Richtung D1 entgegengesetzt ist, bis zum Kontakt der Vorsprünge der ersten Fläche mit den Vorsprüngen der zweiten Fläche ist.

2. Reifen nach Anspruch 1, **dadurch gekennzeichnet, dass**, jeder Einschnitt (2), der mit Vorsprüngen (31, 32, 33, 41, 42, 43) versehen ist, eine Länge L aufweisend, mindestens bestimmte der Vorsprünge eine längliche Form aufweisen und sich auf mindestens 50% der Länge L des Einschnitts erstrecken.

3. Reifen nach Anspruch 2, **dadurch gekennzeichnet, dass** alle Vorsprünge (31, 32, 33, 41, 42, 43), die auf den Flächen gegenüber mindestens eines Einschnitts ausgebildet sind, eine längliche Form aufweisen und sich auf mindestens 50% der Länge L des Einschnitts erstrecken.

4. Reifen nach Anspruch 3, **dadurch gekennzeichnet, dass** die Vorsprünge (31, 32, 33, 41, 42, 43) sich über mindestens 50% der Länge L des Einschnitts erstrecken und eine Zickzack- oder Wellenform aufweisen.

5. Reifen nach einem der Ansprüche 1 bis 4, **dadurch gekennzeichnet, dass** die Vorsprünge (31, 32, 33, 41, 42, 43) sich über mindestens 95% der Länge L des Einschnitts erstrecken.

6. Reifen nach einem der Ansprüche 1 bis 5, **dadurch gekennzeichnet, dass**, jeder Einschnitt einer mittleren Breite e Vorsprünge (31, 32, 33, 41, 42, 43) umfassend, Endbereiche (2', 2") einer Breite e" umfasst, die kleiner als die mittlere Breite e des Einschnitts ist, wobei diese Endbereiche ferner in Ausrichtung zueinander und in der Mittelebene des Einschnitts (2) platziert sind.

7. Reifen nach einem der Ansprüche 1 bis 6, **dadurch gekennzeichnet, dass** mindestens ein Einschnitt (2), der auf den Flächen, die ihn begrenzen, mit Vorsprüngen (31, 32, 33, 41, 42, 43) versehen ist, um einen Winkel höchstens gleich 30 Grad mit einer Richtung senkrecht zu der Kontaktfläche des Elements, in dem der Einschnitt ausgebildet ist, geneigt ist.

## Claims

1. Tyre having a preferred direction of rotation identified by a visible means on the tyre, this tyre being provided with a tread strip comprising a plurality of elements in relief (1), each element in relief having a contact face and lateral faces (11), at least some of these elements in relief having at least one incision (2) opening onto two of the said lateral faces, this incision being delimited by a first face (3) and a second face (4), the first face comprising at least one projection and the second face comprising as many pairs of first and second projections as there are projections on the first face, each projection (31) of the first face (3) being designed to be able to collaborate through contact with a pair of first (41) and second (42) projections on the second face opposite, the said first and second projections (41, 42) of the second face (4) being situated one on each side of each projection (31) of the first face (3) in opposite directions D1 and D2, this tread strip being **characterized in that** the preferred direction of rotation of the tyre is determined so that - under the effect of a braking force applied by the ground to the tread strip under braking, the projections on the first face of each incision come into contact with the projections on the second face more quickly than they do when this same tyre is subjected to a traction force applied by the ground, namely that the distance e1 by which the first face moves relative to the second face in the direction D1 until the projections of the said first face come into contact with the projections of the said second face is different from, namely strictly less than, the distance e2 by which the first face moves relative to the second face in the direction D2, which is opposite to the direction D1, until the projections of the said first face come into contact with the projections of the said second face.

2. Tyre according to Claim 1, **characterized in that**, each incision (2) provided with projections (31, 32, 33, 41, 42, 43) having a length L, at least some of the projections have an elongate shape and extend over at least 50% of the length L of the incision.

3. Tyre according to Claim 2, **characterized in that** all the projections (31, 32, 33, 41, 42, 43) formed on the opposing faces of at least one incision have an elongate shape and extend over at least 50% of the length L of the incision.

4. Tyre according to Claim 3, **characterized in that** the projections (31, 32, 33, 41, 42, 43) extend over at least 50% of the length L of the incision and have a zigzag or wavy shape.

5. Tyre according to one of Claims 1 to 4, **characterized in that** the projections (31, 32, 33, 41, 42, 43) extend over at least 95% of the length L of the incision.

6. Tyre according to one of Claims 1 to 5, **characterized in that** each incision of mean width e comprising projections (31, 32, 33, 41, 42, 43) comprises end parts (2', 2") of width e" smaller than the mean width e of the incision, these end parts also being positioned in alignment with one another and in the mid plane of the incision (2).

7. Tyre according to one of Claims 1 to 6, **characterized in that** at least one incision (2) provided with projections (31, 32, 33, 41, 42, 43) on the faces delimiting it is inclined by an angle at most equal to 30 degrees to a direction perpendicular to the contact face of the element in which the said incision is formed.
